# EUROPEAN PATENT SPECIFICATION

(11) **EP 3 768 510 B1**
(45) Date of publication and mention of the grant of the patent: **27.04.2022**
(21) Application number: 19711392.1
(22) Date of filing: 22.03.2019
(51) Int. Cl.: B32B 21/04, C08G 8/08, C09J 161/06

(54) **MONOCOMPONENT ADHESIVE COMPOSITION COMPRISING FORMALDEHYDE-BASED RESIN WITH A FREE FORMAL-DEHYDE CONTENT BELOW 0,1 WT%, COMPRISING RESORCINOL, ALKYLRESORCINOL AND/OR TANNIN**
EINKOMPONENTIGE KLEBSTOFFZUSAMMENSETZUNG MIT FORMALDEHYD-BASIERTEM HARZ MIT EINEM GEHALT AN FREIEM FORMALDEHYD UNTER 0,1 GEW.-%, MIT RESORCIN, ALKYLRESORCIN UND/ODER TANNIN
COMPOSITION ADHÉSIVE MONOCOMPOSANT COMPRENANT UNE RÉSINE À BASE DE FORMALDÉHYDE AYANT UNE TENEUR EN FORMALDÉHYDE LIBRE INFÉRIEURE À 0,1 WT%, COMPRENANT DU RÉSORCINOL, D'ALKYLRÉSORCINOL ET/OU DU TANIN

(30) Priority: 23.03.2018 EP 18382205
(43) Date of publication of application: 27.01.2021
(73) Proprietor: Foresa Technologies S.L.U., 36650 Caldas de Rei Pontevedra (ES)
(72) Inventor: OTERO VÁZQUEZ, Luis Alberto, 36650 Caldas de Rei, Pontevedra (ES); CASAS PÉREZ, José Manuel, 36650 Caldas de Rei, Pontevedra (ES); FERNÁNDEZ FONDEVILA, Luciano, 36650 Caldas de Rei, Pontevedra (ES)
(74) Representative: Balder IP Law, S.L.
(86) International application number: PCT/EP2019/057303
(87) International publication number: WO 2019/180235

(56) References cited:
- EP-A1- 0 915 141
- EP-A1- 1 342 743
- CN-C- 1 243 069
- US-A1- 2002 132 972
- US-A1- 2017 174 814

## Description

### FIELD OF THE INVENTION

Monocomponent aqueous adhesive composition, useful as a binder composition for fibrous substrates, characterized in that the adhesive composition comprises:(A) from 5 wt.% to 75 wt.% of a formaldehyde-based resin, obtained by reaction of formaldehyde with a second component, and comprising from 0,5 wt.% to 30 wt. % of at least one formaldehyde scavenger, and comprising 0,1 wt. % or less of free formaldehyde as determined by the method ISO 11402:2004; wherein- said second component consists of phenol, the molar ratio of formaldehyde with regard to phenol in the formaldehyde-based resin being between 1,5 and 3,0; or- said second component is a mixture of phenol and at least one of lignin, lignosulfonate, tannin, cardanol, pyrolysis oil of biomass, or hydrochar obtained by thermal treatment of agroforestry residues, wherein in a formaldehyde-phenol resin having a molar ratio of formaldehyde with regard to phenol between 1,5 and 3,0, up to 50 wt. % of the phenol is replaced by an amount in weight, of at least one of lignin, lignosulfonate, tannin, cardanol, pyrolysis oil of biomass, or hydrochar obtained by thermal treatment of agroforestry residues, said amount in weight being exactly the same amount in weight of replaced phenol or up to 25% more or less than the amount in weight of replaced phenol;(B) from 0,5 wt.% to 10 wt.% of at least one compound selected from resorcinol, methylresorcinol, ethylresorcinol or tannin, which is not condensed with the phenol-formaldehyde resin;and in that the adhesive composition has a free formaldehyde content of 0,1 wt. % or less, as determined by the method ISO 11402:2004. monocomponent adhesive composition according to the invention is useful in the manufacture of several materials, for example of wood composite boards, such as wood derived boards, fibreboards, natural and/or synthetic, woven or non-woven fibre mats for compression molding and the resulting composites, particleboards, chip boards, oriented strand boards, plywood and paperboards, but also of fibreglass or rock wool insulations. The monocomponent adhesive composition according to the invention has a free formaldehyde content of 0,1 wt. % or below, thus complying with the increasingly strict legal standards regarding formaldehyde emission, and surprisingly allows, as a further advantage of the invention, for a lower press temperature and press factor during the manufacture of boards.

### BACKGROUND OF THE INVENTION

### Manufacture of wood composite boards

The manufacture of wood composite boards such as particleboard, fibreboard (MDF and HDF), natural fibre mats for compression molding and the resulting composites, chipboards, oriented strand boards and the like generally first comprises combining wood chips, fibres or particles and an adhesive. The mixture is then heated under pressure to cure the adhesive and to form the desired board. Formaldehyde based resins, such as phenol-formaldehyde (PF), are typical adhesives used in the manufacture of such panels.

Phenolic resins are one of the most manufactured adhesives due to their excellent physicochemical properties that they provide to the materials manufactured with them. In fact, they are one of the most used resins for the manufacture of wood composite materials: plywood, fibreboard, oriented fibreboard, moldable fibre mats, etc.

One of the major disadvantages of phenolic resins (compared for example with urea formaldehyde resins or melamine urea formaldehyde resins), is their lower reactivity.

To mitigate this, there are catalysts of diverse chemical nature (including, for example, resorcinol), but with the disadvantages related to the need of providing a two-component solution, which difficults the manipulation and application (see for example Martin W. Feng et al. (2010), Wood and fibre science, Number 2, pages 192-201*).*

Wood composite boards, as well as fibreglass or rock wool insulations, manufactured with formaldehyde based adhesives, are known to result in formaldehyde emissions, both during their manufacture and also later, over time, during their storage or use. It is generally known that formaldehyde is a strong irritant and an allergenic agent, and is also classified as a carcinogen.

### Manufacture of fiberglass insulations and rock wool insulations

The manufacture of fiberglass and rock wool insulation products generally comprises a step of manufacture of the rock wool and fiberglass themselves, which can be performed by different procedures, for example according to the techniques known in the state of the art as rotary process (internal centrifuge), cascade process (external centrifuge), and flame attenuation process (pot & marble).

To ensure the assembly and adhesion of the fibers, an adhesive resin, generally a thermosetting resin, is projected onto the fibers (glass fiber or rock wool), or mixed with the fibers. The mixture of fibers and resin is subjected to a thermal treatment, at a temperature generally higher than 100 °C, in order to effect the polycondensation of the resin and thus obtain a thermal and/or acoustic insulation product. Commonly used adhesive compositions are resins derived from formaldehyde, similar to those used in the manufacture of wood derived boards or wood composite boards. During the manufacture further additives may be added to the mixture of fibers and adhesive, such as for example catalysts for crosslinking the resin or waterproofing emulsions (typically paraffin-based).

That is, the manufacture of fiberglass insulations and rock wool insulations has many similarities to the manufacture of wood derived boards or wood composite boards.

### Formaldehyde

Formaldehyde is a monomer, which is used to polymerize with urea, melamine, phenol to form aminoplast resins. Formaldehyde is under discussion as an indoor air pollutant since the 1960s (O. Wittmann (1962), Holz Roh- Werkst., 20, 221 - 224), when the release of formaldehyde from particleboard during use was documented. Adverse health effects from indoor exposure to formaldehyde, especially irritation of the eyes and upper airways, were first reported in the mid-1960s. Formaldehyde emissions from materials bonded with urea formaldehyde resin were soon identified as the cause of the complaints. As a consequence, a guideline value of 0,1 ppm was already proposed in 1977 by the former German Federal Agency of Health to limit human exposure in dwellings. Criteria for the limitation and regulation of formaldehyde emissions from wood-based materials were established in 1981 in Germany and Denmark. Other countries followed and issued regulations in the mid 1980ies. Formaldehyde was identified as one of the priority indoor air pollutants (Spengler J.D. et al. (1983). Science, 221(4605), 9-17)*.* In parallel, the first studies on the carcinogenicity of formaldehyde triggered an avalanche of scientific work.

REACH (Registration, Evaluation, Authorization and Restriction of Chemicals) entered into force in 2007. It is the main framework for chemical regulation in the European Union and adopted to improve the protection of human health and the environment from the risks that can be posed by chemicals. REACH not only applies to those chemicals used in industrial processes but also to chemicals in products for intended use at the customers site, for example building materials, textiles, consumer products and other appliances.

The European Chemicals Agency requests the provision of a Chemical Safety Report (CSR) for products manufactured using formaldehyde, following the "DECISION ON SUBSTANCE EVALUATION PURSUANT TO ARTICLE 46(1) OF REGULATION (EC) NO 1907/2006 for formaldehyde, CAS No 50-00-0 (EC No 200-001-8)".

The International Agency for Research on Cancer (IARC) classified formaldehyde as a human carcinogen (Group 1) in 2004. The definition of a Group 1 carcinogen according to IARC is as follows: *"There is enough evidence to conclude that it can cause cancer in humans".* The evaluation is based on information regarding the relationship between nasopharyngeal cancer and leukemia related to the exposure to formaldehyde *(International Agency for Research on Cancer (IARC), 2006).* The European Commission classified formaldehyde as a 1B carcinogen and mutagen 2 on June 5th, 2014 in the ordinance EU 605/2014. Category 1B states that the carcinogenic effect has been demonstrated in animal trials and is probable for humans. The reclassification results in a series of consequences depending on national legislation.

For the workplace area the *Scientific Committee on Occupational Exposure Limits (SCOEL)* recommended an 8-hour TWA (time-weighted average) of 0,3 ppm and a STEL (Short Term Exposure Limit) of 0,6 ppm (*Scientific Committee on Occupational Exposure Limits (SCOEL), 2015*)*.* SCOEL considers formaldehyde as a carcinogen Group C (genotoxic carcinogen with a mode-of action-based threshold). The German MAK Commission (*Deutsche Forschungsgemeinschaft (DFG), 2016*) also defines a maximum workplace concentration of 0,3 ppm and classifies formaldehyde as a Group 4 carcinogen (substances that cause cancer in humans or animals or that are considered to be carcinogenic for humans and for which a MAK value can be derived). The *German Federal Institute for Occupational Health and Safety (BAuA)* argues that current literature indicates formaldehyde exposure concentrations without adverse effects, which supports the assumption of a threshold concentration and allows the derivation of an occupational limit value (*Bundesanstalt für Arbeitsschutz und Arbeitsmedizin (BAuA), 2015*)*.*

The WHO confirmed their indoor guideline value for formaldehyde as 0,1 mg/m³ in the year 2010 (*World Health Organization, 2010*)*.* The WHO assessment was studied thoroughly in a further study and an air quality formaldehyde guideline of 0,1 mg/m³ was considered to be protective against both acute and chronic sensory irritation in the airways in the general population (Nielsen GD et al. (2010), Arch Toxicol., 84, 423-446)*.* Moreover, the same authors state that the formaldehyde WHO guideline value is also considered defendable for prevention of all types of cancer, including lymphohematopoietic malignancies.

In 2016 Germany has adopted the WHO guideline value. The Committee on Indoor Guide Values has outlined the following: *"Based on a NOAEC (no observed adverse effect concentration) of 0,63 mg*/*m³ for sensory irritation in humans, a factor of 1 for time extrapolation and a factor of 5 for inter human variability the Committee derives a precautionary indoor air guide value (RW I) of 0,1 mg formaldehyde per cubic meter...In conclusion, the indoor air guide value for formaldehyde is also protective against cancer risk of inhaled formaldehyde"* (*Ausschuss für Innenraumrichtwerte,* 2016*a*). The same committee stated that on the basis of the current data there is no clear association between formaldehyde exposure in the indoor environment and asthma in children (*Ausschuss für Innenraumrichtwerte, 2016b*)*.*

Over the years, a number of national authorities also reassessed their indoor air guideline values (Salthammer et al. (2011), Chemosphere, 82(11), 1507-17) and subsequently intend to agree with the WHO recommendation of 0,1 mg/m³. This harmonization is a pragmatic step as the WHO value is very well assessed and justified. Moreover, the guideline value is also not normally restrictive as formaldehyde conditions in normal living conditions tend to average between 0,02 and 0,04 mg/m³ (Salthammer T et al. (2010), Chem Rev. 110, 2536-2572)*.* According to the currently available state-of-the-art, an orientation to the WHO guideline value of 0,1 mg/m³ would seem sensible, practicable and toxicologically defendable (Salthammer et al (2015), Int J Hyg Environ Health., 218(4),433-6). The argument is supported by Nielsen et al. (2013), Arch Toxicol., 87, 73-98*.* These authors have evaluated current guideline approaches and come to the conclusion that the WHO guideline has been strengthened.

It is therefore a continuous goal to absorb or "scavenge" the formaldehyde contained in wood composite boards and/or generated during the manufacture of such boards or other materials, such as rock wool or fibreglass insulations.

### Formaldehyde emissions: test methods

Many organizations have defined the test methods with which the level of formaldehyde emissions has to be determined:
ISO 11402:2004, "Phenolic, amino and condensation resins -- Determination of free-formaldehyde content", specifies three methods for determining the free-formaldehyde content in the following:
a) Phenolic resins, by potentiometric titration in aqueous or organic solution (hydroxylamine hydrochloride procedure). The method is applicable to resins with free-formaldehyde contents up to and including 15 % by mass. For free-formaldehyde contents between 15 % by mass and 30 % by mass, it may be necessary to adjust the concentrations of the standard volumetric solutions used accordingly.
b) Amino resins and furan resins (sulphite procedure). The method is applicable to resins resulting from the polycondensation of urea and melamine with formaldehyde and to furan resins resulting from the polycondensation of furfuryl alcohol with formaldehyde without further modification.
c) Condensation resins (KCN procedure), including urea resins, furan resins, melamine resins and phenolic resins, as well as combinations and modifications of these resins.

The free-formaldehyde content determined in formaldehyde condensation resins using ISO 11402:2004 represents the actual content at the time of the determination. The value bears no quantitative relationship to the free-formaldehyde content during or after processing.

TSCA Title VI provides for quarterly and quality control testing for hardwood plywood, particleboard, and MDF using specified methods developed by ASTM International, among them it is worth noting:
ASTM D5582-00 (Reapproved 2006), Standard Test Method for Determining Formaldehyde Levels from Wood Products Using a Desiccator. This test method describes a small scale procedure for measuring formaldehyde emissions potential from wood products. The formaldehyde level is determined by collecting airborne formaldehyde in a small distilled water reservoir within a closed desiccator. The quantity of formaldehyde is determined by a chromotropic acid test procedure.

ASTM D6007-02, Standard Test Method for Determining Formaldehyde Concentrations in Air from Wood Products Using a Small-Scale Chamber. This test method measures the formaldehyde concentrations in air from wood products under defined test conditions of temperature and relative humidity. Results obtained from this small-scale chamber test method are intended to be comparable to results obtained testing larger product samples by the large chamber test method for wood products, Test Method E 1333.

ASTM E1333-10, Standard Test Method for Determining Formaldehyde Concentrations in Air and Emission Rates from Wood Products Using a Large Chamber. This test method measures the formaldehyde concentration in air and emission rate from wood products containing formaldehyde under conditions designed to simulate product use. The concentration in air and emission rate is determined in a large chamber under specific test conditions of temperature and relative humidity. The general procedures are also intended for testing product combinations at product-loading ratios and at air-exchange rates typical of the indoor environment.

BS EN 120:1992, Wood based panels. Determination of formaldehyde content-Extraction method called the perforator method, English Version. This European standard describes an extraction method, known as the perforator method, for determining the formaldehyde content of unlaminated and uncoated wood-based panels.

BS EN 717-2:1995, Wood-based panels-Determination of formaldehyde release-Part 2: Formaldehyde release by the gas analysis method, English Version. This European standard describes a procedure for determination of accelerated formaldehyde release from wood-based panels.

JIS A 1460:2001 Building boards-Determination of formaldehyde emission-Desiccator method This method describes a method for testing formaldehyde emissions from construction boards by measuring the concentration of formaldehyde absorbed in distilled or deionized water from samples of a specified surface area placed in a glass desiccator for 24 hours.

### Formaldehyde scavengers

Several compounds useful as formaldehyde scavengers are known in the State of the Art, such as, for example, urea, urea derivatives, urea resins, sodium metabisulfite, ammonium bisulphite.

Several studies of the state of the art are related to catalyst-scavengers and resin systems, such as a few published by researchers in the Department of Chemical Engineering of the University of Oporto

*"*Sodium metabisulphite as a scavenger of air pollutants for wood-based building materials", N A Costa et al., International Wood Products Journal, Volume 4 (2013), Issue 4, pages 242-247, studies the different applications of sodium metabisulphite as a formaldehyde scavenger, but it does not provide an in-depth analysis of the loss of mechanical properties and water resistance of the board, which means that this option is not feasible at an industrial level. Also, from the point of view of REACH, ammonium bisulphate is a hazardous substance; the handling of this substance involves significant measures to prevent workers from breathing sulphur oxides in the air.

*"*Formaldehyde emission in wood based panels: effect of curing reactions", N. A. Costa et al. (2014), International Wood Products Journal, Volume 5, Issue 3, pages 146-150*,* studies the effect of hexamine as a formaldehyde catalyst-scavenger, the use of acid catalysts versus latent catalysts, and their pros and cons. It establishes that the combination of citric and oxalic acids in solid form with latent ammonium sulphate catalysts is the best solution, combined with a low molar ratio resin, to obtain values of less than 4 mg of formaldehyde per 100 g of dry board, applying the EN120 perforator method.

The molar ratio of the resins used is too low: 0,90 moles of formaldehyde per mole of urea. In the article, the tensile mechanical properties are very low for the industrial quality standards accepted by the EPF (European Panel Federation).

In the conclusions of the article itself, it justifies the need to find new formaldehyde catalyst-scavenger systems that fulfil the requirements in terms of mechanical properties and formaldehyde emission of the board, which confirms that achieving a solution that fulfils these requirements is currently an industrial challenge.

*"*Scavengers for achieving zero formaldehyde emission of wood-based panels", Nuno A. Costa et al., Wood Science and Technology (2013), 47, pages 1261-1272, examined the performance of three formaldehyde scavengers known in the manufacture of boards: sodium metabisulphite, ammonium bisulphite, and urea.

To obtain low formaldehyde emission values by the dessicator method (JIS method), more than 5% of the catalyst must be added in the resin, documenting up to 15%; this means that the tensile properties decrease drastically; the boards presented as conclusions of this study were found to fail to comply with the minimum quality standards for the market, so this option is not feasible at the industrial level.

### Resorcinol

Resorcinol, that is, 1,3-dihydroxybenzene, is a natural phenol, present, for example, in argan oil. It is used as an antiseptic and disinfectant, and also as a chemical intermediate for the synthesis of organic compounds.

Phenol-formol-resorcinol resins are known from the state of the art; nevertheless, such resins are condensed products (ie, the components (phenol, formol and resorcinol) are covalently linked with each other, forming polymeric materials) and do not have the advantageous properties provided by the adhesive composition of the present invention: the composition of the invention has a higher reactivity of the composition (which results in lower press temperature and press factors, and even allows a lower dosage of adhesive), as well as a lower press temperature, to achieve the desired properties in the final composite.

For example, GB 612 525 A describes condensation products produced from resorcinol and formaldehyde. The condensation products are to be used as water-soluble resin glues to effectively bond a plurality of wood surfaces to each other.

GB 1 584 800 A discloses a method of making a binder which comprises a modified resol phenol-formaldehyde resin, comprising effecting condensation reactions between phenol, formaldehyde, sodium hydroxide, one or more resorcinols, and urea, or dicyandiamide, or melamine at a temperature above 50 °C.

US 4,172,042 A discloses a binder to be applied onto mineral wool, the binder being modified resol phenol-formaldehyde resin based on phenol, formaldehyde, sodium hydroxide, a water-proofing additive and a nitrogenated compound. The water-proofing additive may be resorcinol or a resorcinol derivative. Phenol and formaldehyde are reacted and at a later stage condensed with alkyl resorcinol at a temperature of 50 to 70 °C.

DE 27 56 848 A1 describes a process including a first polycondensation step wherein phenol and formaldehyde are reacted. The reaction product is then reacted, among others, with alkyl resorcinol. The reaction temperature is 50 to 70 °C.

EP 2 841 478 B1 is related to the preparation of a phenol-formaldehyde resin having a low amount of free formaldehyde, in particular, below 0,5 wt.%; particularly, a process for the preparation of a modified phenol-formaldehyde resin is described, which includes the use of a phenol or aniline derivative to lower the content of free formaldehyde; the resin is used for the manufacture of mineral wood insulation products. The phenol-formaldehyde resin of the invention is said to be obtained by modifying a phenol-formaldehyde resin containing from about 5 to 8,5 wt.% free formaldehyde, having a viscosity below 100 mPa.s at 20°C, which is modified by the phenol or aniline derivative, the resulting resin being essentially composed of condensates produced upon condensation of phenol and formaldehyde, condensates produced upon condensation of the phenol or aniline derivative and formaldehyde, and condensates produced upon condensation of phenol, formaldehyde and the phenol or aniline derivative. The modified phenol-formaldehyde resin resulting from the process of EP 2 841 478 B1 is said to have a content of free formaldehyde of below 0,5 weight %, as measured according to the ISO 11402 method. EP 2 841 478 B1 further describes the use of such a modified phenol-formaldehyde resin for the preparation of a binder composition for fibrous substrates, particularly mineral wool fibres, which may comprise at least one additive such as for example urea. In the examples only one modified phenol-formaldehyde resin is described, obtained by starting from a resin containing 6,9 wt. % of free formaldehyde, thus obtaining a resin modified with resorcinol, with 0,48 wt. % of free formaldehyde.

Further, resorcinol has sometimes been used as a catalyst, either in low concentrations or necessarily in combination with other compounds.

For example, in the publication *"*Effects of esters and resorcinol on phenolic resins as adhesives in medium-density fibreboard manufacturing" (2010), Martin W. Feng et al., Wood and fibre science, Number 2, pages 192-201*,* the speed of curing of two commercial phenolic resins was studied, by using several compounds, including ethylene carbonate, propylene carbonate, glyceryl triacetin and resorcinol as external catalysts.

Further, in WO 2002102915, with title *"Resorcinol-glutaraldehyde resin as an accelerator for curing phenol-formaldehyde resins",* the use of resorcinol as a catalyst in combination with glutaraldehyde in phenol-formaldehyde resins, is described.

In US 20080293911, with title *"Anhydride and resorcinol latent catalyst system for improving cure characteristics of phenolic resins",* the use of resorcinol as a catalyst in combination with anhydride in phenol-formaldehyde resins, is described.

### BRIEF DESCRIPTION OF THE FIGURES

**Figure 1****:** Graphic representation of IB and swelling percentage, both before and after submitting them to a V-100 aging test (EN-319 1087 Part 1), offibreboards manufactured by using the PF resins of Example 6, the PF resin with post-added resorcinol of Example 10, and the PF resins of Examples 11, 12 and 13, containing post-added tannin (Bondtite 345).
**Figure 2****:** Flow chart of an MDF production line (Metso Panelboard)

### DETAILED DESCRIPTION OF THE INVENTION

### Definitions

In the frame of the present invention, the following terms have the meanings indicated: The terms "Formaldehyde based resins" or "formaldehyde derived resins" generally are used to refer to any resin or plastic which is produced from formaldehyde with other reactants, such as urea, phenol, or melamine. For example, urea-formaldehyde resin is a non-transparent thermosetting resin or plastic, produced from urea and formaldehyde. They are used in adhesives, finishes, particleboard, MDF, and molded objects. Phenol formaldehyde resins (PF) or phenolic resins are synthetic polymers obtained by the reaction of phenol or substituted phenol with formaldehyde. They have been widely used for the production of molded products including billiard balls, laboratory countertops, and as coatings and adhesives. -Nevertheless, in the frame of the present invention, the terms "formaldehyde based resins" or "formaldehyde derived resins" refer to a resin obtained by reaction of formaldehyde with a second component, wherein said second component consists of phenol, or said second component is a mixture of phenol and at least one of lignin, lignosulfonate, tannin, cardanol, pyrolysis oil of biomass, or hydrochar obtained by thermal treatment of agroforestry residues, wherein in the formaldehyde-phenol resin up to 50 wt. % of the phenol is replaced by an equivalent amount in weight, of at least one of lignin, lignosulfonate, tannin, cardanol, pyrolysis oil of biomass, or hydrochar obtained by thermal treatment of agroforestry residues.

The term "monocomponent" in the phrase "monocomponent adhesive composition" means that no mixture of two or more compositions is necessary to obtain a usable adhesive composition, but the composition is directly usable without further additions, making the admixture of any further components, e.g. catalysts, before the use of the composition, unnecessary.

"Formaldehyde scavenger" in the frame of the present invention refers to any compound that allows to reduce the content of free formaldehyde in any product or composition. Any formaldehyde scavenger known in the State of the Art may be used. For example, the formaldehyde scavenger may be selected from, but is not limited to, urea, urea derivatives, hexamine, amino group containing compounds, hexamine, sulphite salts and metabisulphite salts.

"Agroforestry residues", as used in the frame of the present invention, refers to any kind of biodegradable residues from crops or trees, such as for example, but not limited to, tree prunings, cereals straw, cereal bran, cereal shells, corn husks, rice hulls, weeds, crops residues, wood chips, sawdust, and similar materials etc.

"Hydrochar obtained by thermal treatment of agroforestry residues" refers to the HTC (Hydrothermal carbonization) process which converts lignocellulosic biomass into a carbonaceous material of lignite grade. The process is carried out at 200 °C in the presence of water. Consequently, water has not to be removed before the process by drying, which is an advantage from energetic point of view, over other thermochemical processes like torrefaction, pyrolysis or gasification. On the other hand, the water generates a pressure of 16 bar and the process has to be carried out in a suitable stainless steel pressure reactor.

"Pyrolysis oil of biomass" refers to a process of thermal decomposition in absence of oxygen. Three fractions are obtained in this process: solid (Char, hydrochar or charcoal), gas (CO, CO₂, H₂, CH₄, C₂Hₓ,...) and liquid (tar, bio-oil). Pyrolisis oil refers to the liquid fraction.

"Wood composite boards" in the frame of the present invention refers to boards obtained by binding and compressing natural fibres, optionally in combination with synthetic fibres, Examples thereof, but not limited to, are particleboard, fibreboard (MDF and HDF), chip boards, oriented strand boards and plywood.

"Synthetic fibres" in the frame of the present invention refers to fibres from polyester, polyethylene or polypropylene.

"Natural fibres" in the frame of the present invention refers to wood fibres, chips, particles, flakes or strands, and/or other natural fibres like flax, hemp, rye straw, wheat straw, rice straw, hemp stalks, kenaf stalks or sugar cane residues.

### The composition

The present invention relates to a monocomponent adhesive composition, which comprises a formaldehyde-based resin and resorcinol, alkylresorcinol and/or tannin, which are not condensed with the resin. The adhesive composition has a free formaldehyde content of 0,1 wt. % or below, complying with the increasingly strict legal standards regarding formaldehyde emission. In the formaldehyde-based resin, phenol may be partially replaced by biobased raw materials.

The monocomponent adhesive composition according to the invention is useful in the manufacture of several materials, for example of wood composite boards, such as wood derived boards, fibreboards, natural and/or synthetic, woven or non-woven fibre mats for compression molding and the resulting composites, particleboards, chip boards, oriented strand boards, plywood and paperboards, but also of fibreglass or rock wool insulations.

According to a first aspect, the present invention is related to a monocomponent aqueous adhesive composition, which is useful as a binder composition for fibrous substrates. The monocomponent aqueous adhesive composition of the invention is characterized in that it comprises:
(A) from 5 wt.% to 75 wt.% of a formaldehyde-based resin; said formaldehyde-based resin having been obtained by reaction of formaldehyde with a second component, said formaldehyde-based resin comprising from 0,5 wt. % to 30 wt. % of a formaldehyde scavenger, such that the formaldehyde-based resin comprises 0,1 wt. % or less of free formaldehyde, as determined by the method ISO 11402:2004. Regarding said second component in the formaldehyde-based resin, there are two options:
   - said second component consists of phenol, the molar ratio of formaldehyde with regard to phenol in the formaldehyde-based resin being between 1,5 and 3,0; or
   - said second component is a mixture of phenol and at least one of lignin, lignosulfonate, tannin, cardanol, pyrolysis oil of biomass, or hydrochar obtained by thermal treatment of agroforestry residues, wherein in a formaldehyde-phenol resin having a molar ratio of formaldehyde with regard to phenol between 1,5 and 3,0, up to 50 wt. % of the phenol is replaced by an amount in weight, of at least one of lignin, lignosulfonate, tannin, cardanol, pyrolysis oil of biomass, or hydrochar obtained by thermal treatment of agroforestry residues, said amount in weight being exactly the same amount of replaced phenol or up to 25% more or less than the amount in weight of replaced phenol;
(B) from 0,5 to 10 wt.% of at least one compound selected from resorcinol, methylresorcinol, ethylresorcinol or tannin, not condensed with the phenol-formaldehyde resin;

The adhesive composition is further characterized in that the free formaldehyde content is 0,1 wt. % or less, as determined by the method ISO 11402:2004.

The weight percentage indicated for the component (B) refers to the total sum of amounts of resorcinol, methylresorcinol, ethylresorcinol or tannin in the adhesive composition.

The formaldehyde scavenger may be selected from, but is not limited to, urea, urea derivatives, hexamine, amino group containing compounds, hexamine, sulphite salts and metabisulphite salts. The scavenger may be contained in the formaldehyde-based resin in concentrations, for example, between 0,5 wt.% and 20 wt.%, or between 0,5 wt.% and 15 wt.%, or between 1 wt.% and 30 wt.%, or between 1 wt.% and 20 wt%, or between 1 wt.% and 15 wt.%, or between 2 wt.% and 20 wt.%, or between 5 wt.% and 20 wt.%, or between 5 wt.% and 15 wt.%, among others.

When the second component is a mixture of phenol and at least one of lignin, lignosulfonate, tannin, cardanol, pyrolysis oil of biomass, or hydrochar obtained by thermal treatment of agroforestry residues, it means that in a formaldehyde-phenol resin having a theoretical molar ratio of formaldehyde with regard to phenol which is between 1,5 and 3,0, before reacting said formaldehyde with the second component, up to 50 wt. % of the phenol is replaced by at least one of lignin, lignosulfonate, tannin, cardanol, pyrolysis oil of biomass, or hydrochar obtained by thermal treatment of agroforestry residues. The amount in weight of taken off phenol is replaced by an amount in weight which is exactly the same amount in weight of replaced phenol, or up to 3%, up to 5%, up to 10 %, up to 20% or up to 25% more or less than the amount in weight of replaced phenol, of one of lignin, lignosulfonate, tannin, cardanol, pyrolysis oil of biomass, or hydrochar obtained by thermal treatment of agroforestry residues, or by an amount in weight which is exactly the same amount in weight of replaced phenol, or up to 3%, up to 5%, up to 10 %, up to 20% or up to 25% more or less than the amount in weight of replaced phenol, of a mixture comprising two or more of lignin, lignosulfonate, tannin, cardanol, pyrolysis oil of biomass, or hydrochar obtained by thermal treatment of agroforestry residues. Preferably, the phenol is replaced by an amount in weight of one of, or a mixture of two or more, of lignin, lignosulfonate, tannin, cardanol, pyrolysis oil of biomass, or hydrochar obtained by thermal treatment of agroforestry residues, which is exactly the same mount in weigh of replaced phenol, or up to 3% more or less than said amount in weight. Preferably, but not limited to, in the second component, the lignin is selected from kraft lignin and organosolv lignin; the lignosulfonate is selected from sodium, potassium and ammonium salts; and the tannin is selected from quebracho, mimosa, pine or spruce tannin.

According to an embodiment, the monocomponent adhesive composition of the invention comprises from 30 wt.% to 65 wt. % of the above defined formaldehyde-based resin. According to a further embodiment, the composition comprises from 40 wt.% to 55 wt.% of the formaldehyde-based resin.

As indicated above, the monocomponent adhesive composition of the invention comprises between 0,5 wt.% and 10 wt.% of one of resorcinol, methylresorcinol, ethylresorcinol or tannin, or between 0,5 wt.% and 10 wt.% of a mixture of two or more of resorcinol, methylresorcinol, ethylresorcinol or tannin. According to particular embodiments, the composition comprises between 2 wt. % and 8 wt. % of resorcinol, methylresorcinol, ethylresorcinol or tannin, or between 2 wt. % and 8 wt. % of a mixture of two or more thereof; or between 3 wt. % and 8 wt. %, or between 4 wt. % and 8 wt.% or between 4 wt. % and 6 wt. % of resorcinol, methylresorcinol, ethylresorcinol or tannin, or of a mixture of two or more thereof. The resorcinol, methylresorcinol, ethylresorcinol or tannin is not condensed with the phenol-formaldehyde resin, i.e., the composition is free of phenol-formaldehyde-(resorcinol / methylresorcinol / ethylresorcinol / tannin) condensates. This is achieved, as will be further detailed hereinafter, by adding the resorcinol to the composition once the reaction or condensation of phenol and formaldehyde has concluded, in conditions that avoids further condensation, namely at temperatures of 20°C or below, preferably at temperatures of 15°C or below, for example between 10 and 20°C, or for example at 14 to 16°C.

The molar ratio of formaldehyde with regard to phenol in the formaldehyde-based resin which is part of the monocomponent adhesive composition of the invention may be between 1,5 and 3, or between 1,6 and 2,7.

According to a further aspect, the invention is related to a process for obtaining the monocomponent adhesive composition of the invention, as defined above. The process comprises the steps of:
a) providing a formaldehyde-based resin, obtained by reaction of formaldehyde with a second component, wherein
   - said second component consists of phenol, the molar ratio of formaldehyde with regard to phenol in the formaldehyde-based resin being between 1,5 and 3,0; or
   - said second component is a mixture of phenol and at least one of lignin, lignosulfonate, tannin, cardanol, pyrolysis oil of biomass, or hydrochar obtained by thermal treatment of agroforestry residues, wherein in a formaldehyde-phenol resin having a molar ratio of formaldehyde with regard to phenol between 1,5 and 3,0, up to 50 wt. % of the phenol is replaced by an amount in weight, of at least one of lignin, lignosulfonate, tannin, cardanol, pyrolysis oil of biomass, or hydrochar obtained by thermal treatment of agroforestry residues, said amount in weight being exactly the same amount of replaced phenol or up to 25% more or less than the amount in weight of replaced phenol;
b) adding from 0,5 wt. % to 30 wt. % of a formaldehyde scavenger selected from urea, urea derivatives, hexamine, amino group containing compounds, hexamine, sulphite salts and metabisulphite salts, at a temperature of 20 to 60 °C, until a formaldehyde-based resin comprising 0,1 wt. % or less of free formaldehyde as determined by the method ISO 11402:2004 is obtained;
c) cooling down to 10-20 °C and adding from 1 to 10 wt% of at least one compound selected from resorcinol, methylresorcinol, ethylresorcinol or tannin.

By cooling down the mixture to a temperature as low as 10-20°C, avoids the formation of phenol-formaldehyde-(resorcinol / methylresorcinol / ethylresorcinol / tannin) condensates.

According to an embodiment, in step a) of the process described above, the formaldehyde-based resin is prepared by a condensation reaction of formaldehyde with a second component, in an aqueous medium, in presence of 0,5 wt. % to 15 wt. % of a basic catalyst, at an initial pH of from 8 to 13, and at temperatures between 55 °C and 90°C.

In the process above, the basic catalyst is selected from NaOH, KOH and Ca(OH)₂, although other basic catalysts may be used and are intended to be included in the scope of the present invention.

A further aspect of the invention is a binder composition for fibrous substrates, which comprises the monocomponent adhesive composition defined above, or obtained according to the process defined above. The binder composition may further comprise one or more additives, which may be selected from, but not limited to, hydrophobic emulsion, fibre softeners (for example, but not limited to, sulphite and bisulphite salts), adhesion promoters (for example, but not limited to, aminosilanes, ethylsilanes, methylsilanes and vinylsilanes) , flame retardants (for example, but not limited to, ammonium polyphosphate and phosphate salts), crosslinkers (for example, but not limited to, dicyandiamine and guanidine), catalysts (for example, but not limited to, acids and salts), and colorants (for example, but not limited to, malachite green).

According to a further aspect, the invention is related to the use of the above binder composition for binding various materials such as wood fibres, chips, particles, flakes or strands, and/or synthetic fibres such as fibres obtained from polyester, polyethylene or polypropylene, or fibreglass or rockwool, and/or natural fibres like flax, hemp, rye straw, wheat straw, rice straw, hemp stalks, kenaf stalks or sugar cane residues, and/or cellulose fibres and/or cellulose particles. The cellulose fibres or particles are preferably of micrometric or nanometric size, for example between 70 nm and 700 µm, or between 100 nm and 100 µm.

The above defined binder composition may be used, for example, but not limited to, the manufacture of wood composite boards, such as wood derived boards, fibreboards, natural and/or synthetic, woven or non-woven fibre mats for compression molding and the resulting composites, particleboards, chip boards, oriented strand boards, plywood and paperboards; or fibreglass or rock wool insulations.

The present invention is also related to any products obtained by the use of the above defined binder composition, specially, but not limited to, any wood or composite boards manufactured by binding various materials such as wood fibres, chips, particles, flakes or strands, and/or synthetic fibres such as fibres obtained from polyester, polyethylene or polypropylene, or fibreglass or rockwool, and/or natural fibres like flax, hemp, rye straw, wheat straw, rice straw, hemp stalks, kenaf stalks or sugar cane residues, and/or cellulose fibres and/or cellulose particles. That is, the boards may be manufactured by only binding, with the above defined binder composition, wood derived fibres or other natural fibres or cellulose fibres/ particles, or may be manufactured by binding, with the above defined binder composition, wood derived fibres combined with synthetic fibres, or synthetic fibres combined with other natural fibres as defined above, or a combination of wood derived fibres, synthetic fibres and other natural fibres, as defined above.

### EXAMPLES

In the following, the invention will be further illustrated by means of examples and comparative examples. The examples should in no case be interpreted as limiting the scope of the invention, but only as an illustration of the invention.

### Example 1: Preparation of a phenol-formaldehyde resin of 140 and 160 cP at 20°C

270 g of formaldehyde aqueous solution at 55 wt. % were loaded into a 1 L vessel and the stirrer was turned on. 429 g of water were loaded. 240 g of Phenol were loaded. The mixture was cooled down to 29 - 31° C. 20 g of sodium hydroxide were added in a 50 wt. % aqueous solution; the mixture was heated to 63-65°C.

At this time the exothermic reaction began. In this first phase, the condensation was carried out at 85°C. Therefore, the exothermic reaction had to be thoroughly controlled until this temperature was reached. When 65°C were reached, the mixture was cooled down to 63°C. When 75°C were reached, the mixture was cooled down to 73°C. When 85°C were reached, the mixture was cooled down to 84 °C. The mixture was then maintained between 84 and 86 °C, until a viscosity of 20-30 cP was reached.

Then, aliquots of 50 ml were taken (the aliquots are returned to the vessel after measuring the viscosity thereof), and their viscosity measured at 20 °C, in 15-minute intervals, and the obtained values were recorded in a corresponding graph. When a viscosity at 20 ° C of between 20 - 30 cP was reached, the mixture was cooled down to 74 - 76 °C; when a viscosity at 20 °C of 40 - 50 cP was reached, the mixture was cooled to 58 - 62° C, in order to better control the condensation cut. The viscosity at 20 °C was then measured at 10-15 minutes intervals, until a viscosity at 20° C between 140 and 160 cP was reached. (measured with the Brookfield rotational viscometer).

Once this viscosity was reached, the mixture was cooled down as quickly as possible.

When the mixture had cooled down to 55 - 60 °C, 40 g of urea were added.

The mixture was further cooled down to 12 - 15° C.

### Example 2: Preparation of a resin of the invention, comprising post-added resorcinol

A resin according to Example 1 was prepared; once the mixture reached a temperature of 12 - 15° C, 20 g of a 50 wt. % resorcinol solution in water were added.

### Example 3: Preparation of a resin of the invention, comprising post-added resorcinol

A resin according to Example 1 was prepared; once the mixture reached a temperature of 12 - 15° C, 40 g of a 50 wt. % resorcinol solution in water were added.

### Example 4: Preparation of a resin of the invention, comprising post-added resorcinol

A resin according to Example 1 was prepared; once the mixture reached a temperature of 12 - 15° C, 60 g of a 50 wt. % resorcinol solution in water were added.

### Example 5: Preparation of a resin of the invention, comprising post-added resorcinol

A resin according to Example 1 was prepared; once the mixture reached a temperature of 12 - 15° C, 80 g of a 50 wt. % resorcinol solution in water were added.

### Example 6: Preparation of a PF resin of 240 - 280 cP at 25 °C

364 g of a formaldehyde aqueous solution at 55 wt. % were loaded in a 1 L vessel and the stirrer was turned on. 230 g of water were loaded. 295g of Phenol were loaded. The mixture was cooled down to 29 - 31° C. 33 g of a sodium hydroxide aqueous solution at 50 wt. % were added.

At this time the exothermic reaction began.

The mixture was heated to 60°C, and is taken to 85°C through a controlled exothermic reaction.

When 56 °C were reached, the mixture was cooled down to 55°C.

When 65°C were reached, the mixture was cooled down to 64°C.

When 73°C were reached, the mixture was cooled down to 72°C.

When 78°C were reached, the mixture was cooled down to 77°C.

When 86°C were reached, the mixture was cooled down to 85°C.

The mixture was maintained at 84 - 86°C during condensation.

Aliquots of 50 ml were taken in 15-minute intervals (the aliquots are returned to the vessel after measuring the viscosity thereof), and the viscosity at 25 °C was measured and the values recorded in the corresponding graph. When the viscosity at 25 °C was between 30-35 cP, the mixture was cooled down to 78-80 °C.

Again aliquots of 50 ml were taken in 15 minutes intervals, and the viscosity at 25°C was measured, and the values recorded in the corresponding graph. When the viscosity at 25 °C reached 40-60 cP, the reaction was stopped by rapid cooling, until reaching 74-76 °C. The viscosity at 25 °C was determined again by means of a 50 ml aliquot, noting the value as the cutting viscosity of the first condensation.

Once said temperature of 74-76 °C was reached, 33 g of Sodium Hydroxide were added. An exothermic reaction developed, which had to be controlled by not allowing the temperature to rise above 78-80 °C, applying cooling, if necessary.

At 78 - 80 °C the viscosity at 25 ° C was determined by means of a 50 ml aliquot, at intervals of 15 minutes, and the values were recorded in the corresponding graph. When the viscosity at 25 ° C reached 100-130 cP, the reaction was stopped by rapid cooling, to reach 72-74 °C. The viscosity at 25 °C was determined again by means of a 50 ml aliquot, noting the value as viscosity of the second condensation cut.

Once said temperature of 72-74 °C was reached, 33 g of Sodium Hydroxide were added. An exothermic reaction developed, which had to be controlled by not allowing the temperature to rise above 76-78°C, applying cooling, if necessary.

At 76-78 °C the viscosity at 25 °C was determined, in 15 minute intervals, by means of a 50 ml aliquot, and the values were recorded in the corresponding graph. When the viscosity at 25°C reached 140 - 180 cP, the reaction mixture was cooled between 3 and 5°C below the previous temperature, in order to better control the reaction, until reaching a viscosity of 240 - 280 cP at 25 °C; once this viscosity was reached, the reaction mixture was cooled as quickly as possible to stop the reaction, until reaching 59 - 61°C. At this temperature, the viscosity at 25 °C was determined, by means of a 50 ml aliquot, noting the value as viscosity of the third condensation cut.

Once this viscosity was reached, the reaction mixture was cooled down as quickly as possible.

When the mixture was cooled down to 55 - 60° C, 10 g of urea were added.

The mixture was cooled down to 12 - 15° C.

### Example 7: Preparation of a resin of the invention, comprising post-added resorcinol

A resin according to Example 6 was prepared; once the mixture reached a temperature of 12 - 15° C, 20 g of a 50 wt. % resorcinol solution in water were added.

### Example 8: Preparation of a resin of the invention, comprising post-added resorcinol

A resin according to Example 6 was prepared; once the mixture reached a temperature of 12 - 15° C, 40 g of a 50 wt. % resorcinol solution in water were added.

### Example 9: Preparation of a resin of the invention, comprising post-added resorcinol

A resin according to Example 6 was prepared; once the mixture reached a temperature of 12 - 15° C, 60 g of a 50 wt. % resorcinol solution in water were added.

### Example 10: Preparation of a resin of the invention, comprising post-added resorcinol

A resin according to Example 6 was prepared; once the mixture reached a temperature of 12 - 15° C, 80 g of a 50 wt. % resorcinol solution in water were added.

### Example 11: Preparation of a resin of the invention, comprising post-added tannin

A resin according to Example 6 was prepared; once the mixture reached a temperature of 12 - 15° C, 40 g of a 50 wt. % aqueous mimosa tannin solution (Bondtite 345) were added.

### Example 12: Preparation of a resin of the invention, comprising post-added tannin

A resin according to Example 6 was prepared; once the mixture reached a temperature of 12 - 15° C, 80 g of a 50 wt. % mimosa tannin solution (Bondtite 345) were added.

### Example 13: Preparation of a resin of the invention, comprising post-added tannin

A resin according to Example 6 was prepared; once the mixture reached a temperature of 12 - 15° C, 120 g of a 50 wt. % mimosa tannin solution (Bondtite 345) were added.

### Example 14: Preparation of a resin of the invention, comprising post-added alkylresorcinol

A resin according to Example 1 was prepared; once the mixture reached a temperature of 12 - 15° C, 40 g of a 50 wt. % alkylresorcinol solution (a mixture of methylresorcinol (higher than 48 wt. %) and ethylresorcinol (lower than 12 wt. %)) in water were added.

### Example 15: Preparation of a resin of the invention, comprising post-added alkylresorcinol

A resin according to Example 1 was prepared; once the mixture reached a temperature of 12 - 15° C, 60 g of a 50 wt. % alkylresorcinol solution (a mixture of methylresorcinol (higher than 48 wt. %) and ethylresorcinol (lower than 12 wt. %)) in water were added.

### Example 16: Preparation of a resin of the invention, comprising post-added alkylresorcinol

A resin according to Example 1 was prepared; once the mixture reached a temperature of 12 - 15° C, 80 g of a 50 wt. % alkylresorcinol solution (a mixture of methylresorcinol (higher than 48 wt. %) and ethylresorcinol (lower than 12 wt. %)) in water were added.

### Example 17: Manufacture of Fibreboards

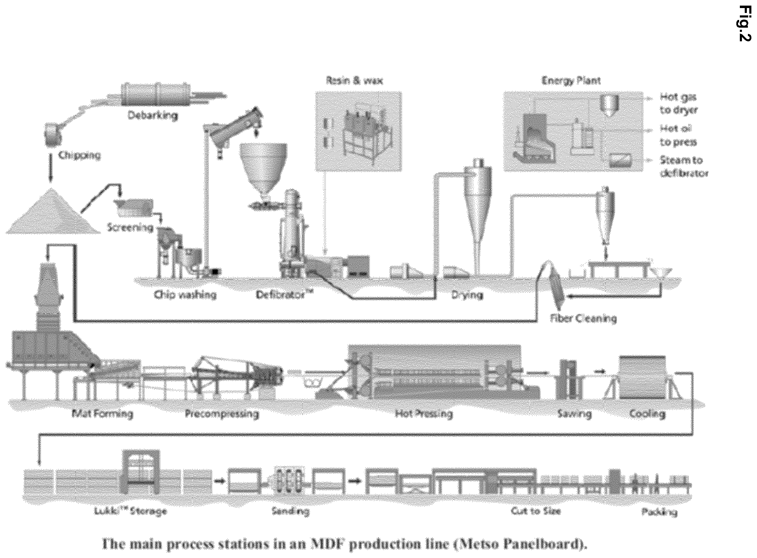

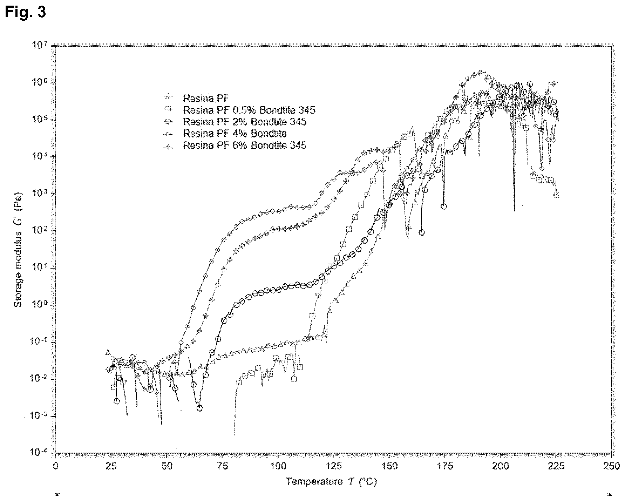

Fibreboards were manufactured at industrial scale in FINSA's MDF factory located in Padrón (A Coruña), 6^{th} September 2017, by using the PF resin of Example 6 and the PF resin with post-added resorcinol of Example 10. The resin was added to the Pinus Pinaster wood fibre in a blow line system and after the drying in two stages, the mat was formed and pressed in a continuous press. The flow chart of the process is shown in Figure 2. Conditions such as percentage of glue, press factor and temperature were altered, and the quality of the obtained boards tested and compared.

The results are shown in the subsequent Examples.

### Example 18: Press factor

Fibreboards were manufactured at industrial scale according to Example 17.

Fibreboard FB1 was manufactured using the resin according to Example 6; fibreboards FB2 to FB6 were manufactured using the resin according to Example 10.

For the manufacture of fibreboards FB1 and FB2, a press factor of about 14,5 was applied. For fibreboard FB3, the press factor was reduced to about 13,5; for fibreboard FB4 and FB5, to about 13,0; and for FB6, to about 12,5.

For the manufacture of fibreboards FB1 to FB4, 17 wt. % resin was used, for fibreboards FB5 and FB6 this percentage was reduced (see Table 1 below).

**Table 1**

| | **PRODUCTION DATA** | | | | |
|---|---|---|---|---|---|
| **TEST NUMBER** | **% GLUE EXT LAYER** | **% GLUE INT LAYER** | **% RESORCINE** | **SPEED (mm/s)** | **PRESS FACTOR** |
| **FB1** | 14,5 | 17 | 0 | 145 | 14,4 |
| **FB2** | 14,5 | 17 | 4 | 145 | 14,5 |
| **FB3** | 14,5 | 17 | 4 | 155 | 13,5 |
| **FB4** | 14,5 | 17 | 4 | 165 | 12,6 |
| **FB5** | 14,5 | 16 | 4 | 165 | 12,5 |
| **FB6** | 14,5 | 16 | 4 | 175 | 11,9 |

**Table 2**

| | **TRIALS RESULTS** | | | | | | | | | | |
|---|---|---|---|---|---|---|---|---|---|---|---|
| **TEST NUMBER** | **DENS. AVERAGE (Kg/m³)** | **I.B. (N/mm²)** | **SUPERIOR SURFACE SOUNDNESS (N/mm²)** | **INFERIOR SURFACE SOUNDNESS (N/mm²)** | **SWELLING (%)** | **ABS. (%)** | **HUMIDITY (%)** | **% PROFILE** | **Minimum Dens. ^{∗∗}** | **SWELLING . V-100 (%)** | **I.B. V-100 (N/mm²)** |
| **FB1** | 1073 | 3,1 | 3,2 | 3,4 | 3,1 | 10,0 | 3,5 | 98,2 | 1049 | 4,1 | 1,3 |
| **FB2** | 1089 | 3,7 | 4,0 | 3,2 | 3,1 | 9,0 | 3,5 | 98,6 | 1077 | 2,8 | 2,3 |
| **FB3** | 1088 | 3,0 | 2,7 | 2,4 | 3,1 | 8,7 | 3,4 | 98,0 | 1075 | 3,3 | 2,2 |
| **FB4** | 1067 | 3,7 | 3,8 | 3,4 | 3,0 | 10,1 | 3,4 | 94,5 | 1001 | 2,7 | 2,4 |
| **FB5** | 1069 | 4,7 | 3,1 | 2,4 | 3,5 | 9,2 | 3,3 | 94,7 | 1014 | 2,5 | 2,3 |
| **FB6** | 1077 | 3,2 | 4,4 | 3,0 | 3,1 | 8,3 | 3,4 | 89,9 | 993 | 3,2 | 2,3 |

As may be observed, the fibreboards obtained with the PF resin with post-added resorcinol, i.e. fibreboards FB2 to FB6, all have a similar or even increased internal bond strength (I.B.). The IB after submitting the boards to a V-100 aging test (EN-319 1087 Part 1) is much better in the fibreboards manufactured by using resin with post-added resorcinol (FB2 to FB6), independently from conditions such as press factor or glue %, than in the resin without post-added resorcinol (FB1). Other properties, such as swelling, water absorbance or humidity, are not altered by using resin with post-added resorcinol.

### Example 19: Press Temperature

Fibreboards were manufactured by using the PF resin of Example 1, a commercial PF resin (RES 3250^{®}), the PF resin with post-added resorcinol of Example 5 (containing 4 wt. % resorcinol), and said commercial PF resin, adding 4 wt. % resorcinol thereto. Wood fibre of Pinus pinaster and resin (15 wt. % of resin, dry/dry) were mixed in FORESA's pilot plant (Spanish company FORESA, S.A. (http://www.foresa.com/en), using a blender to spray the resin over the fibre, a manually formation of the mat and the composite formation plate press. In the manufacture of fibreboards using the PF resin of Example 1, the press temperature was gradually decreased from 200 °C (board 1,1 in Table 3) to 135 °C (board 1,6 in Table 3). All the remaining boards where manufactured by use of the lowest press temperature, that is, 135 °C. The composite appearance was inspected with regard to blistering and stains. The results are gathered in Table 3 below.

**Table 3**

| **Board N°** | **Press Temperature** | **Thickness** | **Measurements** | **Mat weight** | **Composite appearance** |
|---|---|---|---|---|---|
| **1. PF RESIN** | | | | | |
| 1,1 | 200 | 1,7mm | 21,5×21,5 | 69 | Perfect |
| 1,2 | 160 | 1,7mm | 23 × 23 | 79 | Blistering |
| 1,3 | 155 | 1,7mm | 23 × 23 | 79 | Blistering |
| 1,4 | 150 | 1,7mm | 23 × 23 | 79 | Blistering |
| 1,5 | 140 | 1,7mm | 23 × 23 | 79 | Blistering |
| 1,6 | 135 | 1,7mm | 23 × 23 | 79 | Blistering |

| **2. PF RESIN + 4% Resorcinol** | | | | | |
|---|---|---|---|---|---|
| 2,1 | 135 | 1,7mm | 23 × 23 | 79 | Perfect (stains) |
| 2,2 | 135 | 1,7mm | 23 × 23 | 79 | Perfect |
| 2,3 | 135 | 1,7mm | 23 × 23 | 79 | Perfect (stains) |
| 2,4 | 135 | 1,7mm | 23 × 23 | 79 | Perfect |

| **3. COMMERCIAL PF RESIN** | | | | | |
|---|---|---|---|---|---|
| 3,1 | 135 | 1,7mm | 23 × 23 | 79 | Blistering |
| 3,2 | 135 | 1,7mm | 23 × 23 | 79 | Blistering |
| 3,3 | 135 | 1,7mm | 23 × 23 | 79 | Blistering |
| 3,4 | 135 | 1,7mm | 23 × 23 | 79 | Blistering |
| 3,5 | 135 | 1,7mm | 24 × 23 | 80 | Blistering |

| **4. PF RESIN** + **4% Resorcinol** | | | | | |
|---|---|---|---|---|---|
| 4,1 | 135 | 1,7mm | 23 × 23 | 79 | Perfect (stains) |
| 4,2 | 135 | 1,7mm | 23 × 23 | 79 | Perfect |
| 4,3 | 135 | 1,7mm | 23 × 23 | 79 | Perfect (stains) |
| 4,4 | 135 | 1,7mm | 23 × 23 | 79 | Perfect |

The boards manufactured with the resin according to Example 1 (without resorcinol: boards 1,1 to 1,6 in Table 3) only presented a perfect appearance when manufactured at the standard press temperature of 200 °C (board 1,1 in Table 3). As soon as the press temperature was 160 °C or lower, blistering appeared and the boards did not comply with the quality requirements (boards 1,2 through 1,6 in Table 3). The boards manufactured with the commercial PF resin at 135 °C all presented blistering, and thus the boards did not comply with the quality requirements (boards 23,1 to 3,5 in Table 3).

Both the boards manufactured with the resin according to Example 5 (with post-added resorcinol: boards 2,1 to 2,4 in Table 3) and the commercial PF resin containing post-added resorcinol (boards 4,1 to 4,4 in Table 3), manufactured at a press temperature of 135 °C, had a perfect appearance, with the exception of occasional stains. Thus, even with a much lower press temperature (135 °C versus the standard 200°C), the boards manufactured with resins containing post-added resorcinol had a perfect appearance and complied with the quality requirements.

### Example 20: Manufacture of Fibreboards with resins containing tannins

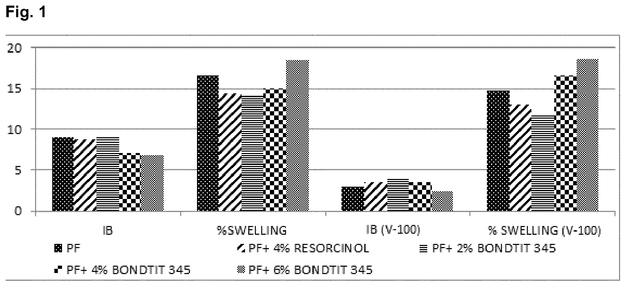

Fibreboards were manufactured by using the PF resins of Example 6, the PF resin with post-added resorcinol of Example 10, and the PF resins of Examples 11, 12 and 13, containing post-added tannin (Bondtite 345). Wood fibre of Pinus pinaster and resin were mixed in conditions known in the state of the art, in FORESA's pilot plant using a blender to spray the resin over the fibre, a manually formation of the mat and the composite formation plate press. The IB and swelling percentage were determined for all of the boards, both before and after submitting them to a V-100 aging test (EN-319 1087 Part 1). The results are shown in Table 4 and Figure 1.

**Table 4**

| **RESIN** | **IB** | **%SWELLING** | **IB (post V-100)** | **%SWELLING (post V-100)** |
|---|---|---|---|---|
| **PF** | 9 | 16,63 | 3,0 | 14,72 |
| **Example 10 PF+ 4% RESORCINOL** | 8,8 | 14,32 | 3,5 | 13,05 |
| **Example 11 PF+ 2% BONDTITE 345** | 9,1 | 14,22 | 4,1 | 11,73 |
| **Example 12 PF+ 4% BONDTITE 345** | 7,2 | 15,02 | 3,5 | 16,62 |
| **Example 13 PF+ 6% BONDTITE 345** | 6,8 | 18,50 | 2,5 | 18,66 |

### Example 21: Preparation of a phenol/lignin formaldehyde resin comprising post-added resorcinol

364 g of a formaldehyde aqueous solution at 55 wt. % were loaded in a 1 L vessel and the stirrer was turned on. 230 g of water were loaded. 220 g of Phenol were loaded and 75 g of kraft lignin were added. The mixture was cooled down to 29 - 31 °C. 40 g of a sodium hydroxide aqueous solution at 50 wt. % were added.

At this time the exothermic reaction began.

The mixture was heated to 60°C, and is taken to 85°C through a controlled exothermic reaction.

When 56 °C were reached, the mixture was cooled down to 55°C.

When 65°C were reached, the mixture was cooled down to 64°C.

When 73°C were reached, the mixture was cooled down to 72°C.

When 78°C were reached, the mixture was cooled down to 77°C.

When 86°C were reached, the mixture was cooled down to 85°C.

The mixture was maintained at 84 - 86°C during condensation.

Aliquots of 50 ml were taken in 15-minute intervals (the aliquots are returned to the vessel after measuring the viscosity thereof), and the viscosity at 25 °C was measured and the values recorded in the corresponding graph. When the viscosity at 25 ° C was between 30-35 cP, the mixture was cooled down to 78-80 °C.

Again aliquots of 50 ml were taken in 15 minutes intervals, and the viscosity at 25°C was measured, and the values recorded in the corresponding graph. When the viscosity at 25 °C reached 40-60 cP, the reaction was stopped by rapid cooling, until reaching 74-76 °C. The viscosity at 25 °C was determined again by means of a 50 ml aliquot, noting the value as the cutting viscosity of the first condensation.

Once said temperature of 74-76 °C was reached, 40 g of Sodium Hydroxide were added. An exothermic reaction developed, which had to be controlled by not allowing the temperature to rise above 78-80 °C, applying cooling, if necessary.

At 78 - 80 °C the viscosity at 25 ° C was determined by means of a 50 ml aliquot, at intervals of 15 minutes, and the values were recorded in the corresponding graph. When the viscosity at 25 ° C reached 100-130 cP, the reaction was stopped by rapid cooling, to reach 72-74 °C. The viscosity at 25 °C was determined again by means of a 50 ml aliquot, noting the value as viscosity of the second condensation cut.

Once said temperature of 72-74 °C was reached, 40 g of Sodium Hydroxide were added. An exothermic reaction developed, which had to be controlled by not allowing the temperature to rise above 76-78°C, applying cooling, if necessary.

At 76-78 °C the viscosity at 25 °C was determined, in 15 minute intervals, by means of a 50 ml aliquot, and the values were recorded in the corresponding graph. When the viscosity at 25°C reached 140 - 180 cP, the reaction mixture was cooled between 3 and 5 °C below the previous temperature, in order to better control the reaction, until reaching a viscosity of 240 - 280 cP at 25 °C; once this viscosity was reached, the reaction mixture was cooled as quickly as possible to stop the reaction, until reaching 59 - 61°C. At this temperature, the viscosity at 25 °C was determined, by means of a 50 ml aliquot, noting the value as viscosity of the third condensation cut.

Once this viscosity was reached, the reaction mixture was cooled down as quickly as possible.

When the mixture was cooled down to 55 - 60° C, 10 g of urea were added.

The mixture was cooled down to 12 - 15° C.

Once the mixture reached a temperature of 12 - 15° C, 80 g of a 50 wt. % resorcinol solution in water were added.

### Example 22: Preparation of a phenol/pyrolysis oil formaldehyde resin comprising post-added resorcinol

364 g of a formaldehyde aqueous solution at 55 wt. % were loaded in a 1 L vessel and the stirrer was turned on. 230 g of water were loaded. 220 g of Phenol were loaded and 75 g of pyrolysis oil were added. The mixture was cooled down to 29 - 31 °C. 40 g of a sodium hydroxide aqueous solution at 50 wt. % were added.

At this time the exothermic reaction began.

The mixture was heated to 60°C, and is taken to 85°C through a controlled exothermic reaction.

When 56 °C were reached, the mixture was cooled down to 55°C.

When 65°C were reached, the mixture was cooled down to 64°C.

When 73°C were reached, the mixture was cooled down to 72°C.

When 78°C were reached, the mixture was cooled down to 77°C.

When 86°C were reached, the mixture was cooled down to 85°C.

The mixture was maintained at 84 - 86°C during condensation.

Aliquots of 50 ml were taken in 15-minute intervals (the aliquots are returned to the vessel after measuring the viscosity thereof), and the viscosity at 25 °C was measured and the values recorded in the corresponding graph. When the viscosity at 25 ° C was between 30-35 cP, the mixture was cooled down to 78-80 °C.

Again aliquots of 50 ml were taken in 15 minutes intervals, and the viscosity at 25°C was measured, and the values recorded in the corresponding graph. When the viscosity at 25 °C reached 40-60 cP, the reaction was stopped by rapid cooling, until reaching 74-76 °C. The viscosity at 25 °C was determined again by means of a 50 ml aliquot, noting the value as the cutting viscosity of the first condensation.

Once said temperature of 74-76 °C was reached, 40 g of Sodium Hydroxide were added. An exothermic reaction developed, which had to be controlled by not allowing the temperature to rise above 78-80 °C, applying cooling, if necessary.

At 78 - 80 °C the viscosity at 25 ° C was determined by means of a 50 ml aliquot, at intervals of 15 minutes, and the values were recorded in the corresponding graph. When the viscosity at 25 ° C reached 100-130 cP, the reaction was stopped by rapid cooling, to reach 72-74 °C. The viscosity at 25 °C was determined again by means of a 50 ml aliquot, noting the value as viscosity of the second condensation cut.

Once said temperature of 72-74 °C was reached, 40 g of Sodium Hydroxide were added. An exothermic reaction developed, which had to be controlled by not allowing the temperature to rise above 76-78°C, applying cooling, if necessary.

At 76-78 °C the viscosity at 25 °C was determined, in 15 minute intervals, by means of a 50 ml aliquot, and the values were recorded in the corresponding graph. When the viscosity at 25°C reached 140 - 180 cP, the reaction mixture was cooled between 3 and 5°C below the previous temperature, in order to better control the reaction, until reaching a viscosity of 240 - 280 cP at 25 °C; once this viscosity was reached, the reaction mixture was cooled as quickly as possible to stop the reaction, until reaching 59 - 61 °C. At this temperature, the viscosity at 25 °C was determined, by means of a 50 ml aliquot, noting the value as viscosity of the third condensation cut.

Once this viscosity was reached, the reaction mixture was cooled down as quickly as possible.

When the mixture was cooled down to 55 - 60° C, 10g of urea were added.

The mixture was cooled down to 12 - 15° C.

Once the mixture reached a temperature of 12 - 15 °C, 80 g of a 50 wt. % resorcinol solution in water were added.

### Example 23: Preparation of a phenol/cardanol formaldehyde resin comprising post-added resorcinol

364 g of a formaldehyde aqueous solution at 55 wt. % were loaded in a 1 L vessel and the stirrer was turned on. 230g of water were loaded. 220g of Phenol were loaded and 75 g of cardanol were added. The mixture was cooled down to 29 - 31° C. 40 g of a sodium hydroxide aqueous solution at 50 wt. % were added.

At this time the exothermic reaction began.

The mixture was heated to 60°C, and is taken to 85°C through a controlled exothermic reaction.

When 56 °C were reached, the mixture was cooled down to 55°C.

When 65°C were reached, the mixture was cooled down to 64°C.

When 73°C were reached, the mixture was cooled down to 72°C.

When 78°C were reached, the mixture was cooled down to 77°C.

When 86°C were reached, the mixture was cooled down to 85°C.

The mixture was maintained at 84 - 86°C during condensation.

Aliquots of 50 ml were taken in 15-minute intervals (the aliquots are returned to the vessel after measuring the viscosity thereof), and the viscosity at 25 °C was measured and the values recorded in the corresponding graph. When the viscosity at 25 ° C was between 30-35 cP, the mixture was cooled down to 78-80 °C.

Again aliquots of 50 ml were taken in 15 minutes intervals, and the viscosity at 25°C was measured, and the values recorded in the corresponding graph. When the viscosity at 25 °C reached 40-60 cP, the reaction was stopped by rapid cooling, until reaching 74-76 °C. The viscosity at 25 °C was determined again by means of a 50 ml aliquot, noting the value as the cutting viscosity of the first condensation.

Once said temperature of 74-76 °C was reached, 40 g of Sodium Hydroxide were added. An exothermic reaction developed, which had to be controlled by not allowing the temperature to rise above 78-80 °C, applying cooling, if necessary.

At 78 - 80 °C the viscosity at 25 ° C was determined by means of a 50 ml aliquot, at intervals of 15 minutes, and the values were recorded in the corresponding graph. When the viscosity at 25 ° C reached 100-130 cP, the reaction was stopped by rapid cooling, to reach 72-74 °C. The viscosity at 25 °C was determined again by means of a 50 ml aliquot, noting the value as viscosity of the second condensation cut.

Once said temperature of 72-74 °C was reached, 40 g of Sodium Hydroxide were added. An exothermic reaction developed, which had to be controlled by not allowing the temperature to rise above 76-78°C, applying cooling, if necessary.

At 76-78 °C the viscosity at 25 °C was determined, in 15 minute intervals, by means of a 50 ml aliquot, and the values were recorded in the corresponding graph. When the viscosity at 25°C reached 140 - 180 cP, the reaction mixture was cooled between 3 and 5°C below the previous temperature, in order to better control the reaction, until reaching a viscosity of 240 - 280 cP at 25 °C; once this viscosity was reached, the reaction mixture was cooled as quickly as possible to stop the reaction, until reaching 59 - 61°C. At this temperature, the viscosity at 25 °C was determined, by means of a 50 ml aliquot, noting the value as viscosity of the third condensation cut.

Once this viscosity was reached, the reaction mixture was cooled down as quickly as possible.

When the mixture was cooled down to 55 - 60° C, 10g of urea were added.

The mixture was cooled down to 12 - 15° C.

Once the mixture reached a temperature of 12 - 15° C, 80 g of a 50 wt. % resorcinol solution in water were added.

### Example 24: Preparation of a phenol/lignosulfonate formaldehyde resin comprising post-added resorcinol

364 g of a formaldehyde aqueous solution at 55 wt. % were loaded in a 1 L vessel and the stirrer was turned on. 230g of water were loaded. 220g of Phenol were loaded and 75g of lignosulfonate were added. The mixture was cooled down to 29 - 31° C. 40 g of a sodium hydroxide aqueous solution at 50 wt. % were added.

At this time the exothermic reaction began.

The mixture was heated to 60°C, and is taken to 85°C through a controlled exothermic reaction.

When 56 °C were reached, the mixture was cooled down to 55°C.

When 65°C were reached, the mixture was cooled down to 64°C.

When 73°C were reached, the mixture was cooled down to 72°C.

When 78°C were reached, the mixture was cooled down to 77°C.

When 86°C were reached, the mixture was cooled down to 85°C.

The mixture was maintained at 84 - 86°C during condensation.

Aliquots of 50 ml were taken in 15-minute intervals, and the viscosity at 25 °C was measured and the values recorded in the corresponding graph. When the viscosity at 25 ° C was between 30-35 cP, the mixture was cooled down to 78-80 °C.

Again aliquots of 50 ml were taken in 15 minutes intervals, and the viscosity at 25 °C was measured, and the values recorded in the corresponding graph. When the viscosity at 25 °C reached 40-60 cP, the reaction was stopped by rapid cooling, until reaching 74-76 °C. The viscosity at 25 °C was determined again by means of a 50 ml aliquot, noting the value as the cutting viscosity of the first condensation.

Once said temperature of 74-76 °C was reached, 40 g of Sodium Hydroxide were added. An exothermic reaction developed, which had to be controlled by not allowing the temperature to rise above 78-80 °C, applying cooling, if necessary.

At 78 - 80 °C the viscosity at 25 ° C was determined by means of a 50 ml aliquot, at intervals of 15 minutes, and the values were recorded in the corresponding graph. When the viscosity at 25 ° C reached 100-130 cP, the reaction was stopped by rapid cooling, to reach 72-74 °C. The viscosity at 25 °C was determined again by means of a 50 ml aliquot, noting the value as viscosity of the second condensation cut.

Once said temperature of 72-74 °C was reached, 40g of Sodium Hydroxide were added. An exothermic reaction developed, which had to be controlled by not allowing the temperature to rise above 76-78°C, applying cooling, if necessary.

At 76-78 °C the viscosity at 25 °C was determined, in 15 minute intervals, by means of a 50 ml aliquot, and the values were recorded in the corresponding graph. When the viscosity at 25°C reached 140 - 180 cP, the reaction mixture was cooled between 3 and 5°C below the previous temperature, in order to better control the reaction, until reaching a viscosity of 240 - 280 cP at 25 °C; once this viscosity was reached, the reaction mixture was cooled as quickly as possible to stop the reaction, until reaching 59 - 61°C. At this temperature, the viscosity at 25 °C was determined, by means of a 50 ml aliquot, noting the value as viscosity of the third condensation cut.

Once this viscosity was reached, the reaction mixture was cooled down as quickly as possible.

When the mixture was cooled down to 55 - 60° C, 10g of urea were added.

The mixture was cooled down to 12 - 15° C.

Once the mixture reached a temperature of 12 - 15° C, 80 g of a 50 wt. % resorcinol solution in water were added.

### Example 25: Preparation of a PF resin comprising post-added resorcinol

364 g of a formaldehyde aqueous solution at 55 wt. % were loaded in a 1 L vessel and the stirrer was turned on. 230g of water were loaded. 295g of Phenol were loaded. The mixture was cooled down to 29 - 31° C. 40 g of a sodium hydroxide aqueous solution at 50 wt. % were added.

At this time the exothermic reaction began.

The mixture was heated to 60 °C, and is taken to 85°C through a controlled exothermic reaction.

When 56 °C were reached, the mixture was cooled down to 55°C.

When 65°C were reached, the mixture was cooled down to 64°C.

When 73°C were reached, the mixture was cooled down to 72°C.

When 78°C were reached, the mixture was cooled down to 77°C.

When 86°C were reached, the mixture was cooled down to 85°C.

The mixture was maintained at 84 - 86°C during condensation.

Aliquots of 50 ml were taken in 15-minute intervals (the aliquots are returned to the vessel after measuring the viscosity thereof), and the viscosity at 25 °C was measured and the values recorded in the corresponding graph. When the viscosity at 25 ° C was between 30-35 cP, the mixture was cooled down to 78-80 °C.

Again aliquots of 50 ml were taken in 15 minutes intervals, and the viscosity at 25°C was measured, and the values recorded in the corresponding graph. When the viscosity at 25 °C reached 40-60 cP, the reaction was stopped by rapid cooling, until reaching 74-76 °C. The viscosity at 25 °C was determined again by means of a 50 ml aliquot, noting the value as the cutting viscosity of the first condensation.

Once said temperature of 74-76 °C was reached, 40 g of Sodium Hydroxide were added. An exothermic reaction developed, which had to be controlled by not allowing the temperature to rise above 78-80 °C, applying cooling, if necessary.

At 78 - 80 °C the viscosity at 25 °C was determined by means of a 50 ml aliquot, at intervals of 15 minutes, and the values were recorded in the corresponding graph. When the viscosity at 25 ° C reached 100-130 cP, the reaction was stopped by rapid cooling, to reach 72-74 °C. The viscosity at 25 °C was determined again by means of a 50 ml aliquot, noting the value as viscosity of the second condensation cut.

Once said temperature of 72-74 °C was reached, 40 g of Sodium Hydroxide were added. An exothermic reaction developed, which had to be controlled by not allowing the temperature to rise above 76-78°C, applying cooling, if necessary.

At 76-78 °C the viscosity at 25 °C was determined, in 15 minute intervals, by means of a 50 ml aliquot, and the values were recorded in the corresponding graph. When the viscosity at 25°C reached 140 - 180 cP, the reaction mixture was cooled between 3 and 5°C below the previous temperature, in order to better control the reaction, until reaching a viscosity of 240 - 280 cP at 25 °C; once this viscosity was reached, the reaction mixture was cooled as quickly as possible to stop the reaction, until reaching 59 - 61°C. At this temperature, the viscosity at 25 °C was determined, by means of a 50 ml aliquot, noting the value as viscosity of the third condensation cut.

Once this viscosity was reached, the reaction mixture was cooled down as quickly as possible.

When the mixture was cooled down to 55 - 60° C, 10g of urea were added.

The mixture was cooled down to 12 - 15° C.

Once the mixture reached a temperature of 12 - 15° C, 80 g of a 50 wt. % resorcinol solution in water were added.

### Example 26: Manufacture of plywood.

Plywood was manufactured by using the PF resin of Example 25, and the PF resin with post-added resorcinol of Example 26.

The resin compositions were formulated as follows:
100 kg resin
37,5kg calcium carbonat
12,5kg olive stone powder
1,5kg water.

Plywood of 12mm thickness was produced and the results according to standard EN-314 are shown in Table 4 below:

**Table 4**

| Resin | **Press temperature** | **Press time** | **Resistance N/mm2** | **Failure** |
|---|---|---|---|---|
| Example 25 | 120°C | 11 minutes | 1,36 | 61% |
| Example 26 | 109°C | 13 minutes | 1,25 | 74% |
| Example 26 | 109°C | 11 minutes | 1,59 | 52% |

The press temperature may be reduced by 10 °C without impairing the performance of the plywood (or, surprisingly, even improving it).

### Example 27: Rheometer graph for different concentrations of mimosa tannin solution

A graph from a rheometer (Discovery HR-2 (TA Instruments)) was obtained, in order to compare the effect of adding different concentrations of mimosa tannin (Bondtite 345) to a commercial PF resin (RES 3250^{®}); the storage modulus versus increasing temperature is represented. As may be observed, when even as low as 0,5 wt.% of mimosa tannin is added to the commercial PF resin, a reduction of the temperature at which the polymer is cured, may be observed.

## Claims

1. Monocomponent aqueous adhesive composition, useful as a binder composition for fibrous substrates, **characterized in that** the adhesive composition comprises:
(A) from 5 wt.% to 75 wt.% of a formaldehyde-based resin, obtained by reaction of formaldehyde with a second component, and comprising from 0,5 wt.% to 30 wt. % of at least one formaldehyde scavenger, and comprising 0,1 wt. % or less of free formaldehyde as determined by the method ISO 11402:2004; wherein
- said second component consists of phenol, the molar ratio of formaldehyde with regard to phenol in the formaldehyde-based resin being between 1,5 and 3,0; or
- said second component is a mixture of phenol and at least one of lignin, lignosulfonate, tannin, cardanol, pyrolysis oil of biomass, or hydrochar obtained by thermal treatment of agroforestry residues, wherein in a formaldehyde-phenol resin having a molar ratio of formaldehyde with regard to phenol between 1,5 and 3,0, up to 50 wt. % of the phenol is replaced by an amount in weight, of at least one of lignin, lignosulfonate, tannin, cardanol, pyrolysis oil of biomass, or hydrochar obtained by thermal treatment of agroforestry residues, said amount in weight being exactly the same amount in weight of replaced phenol or up to 25% more or less than the amount in weight of replaced phenol;
(B) from 0,5 wt.% to 10 wt.% of at least one compound selected from resorcinol, methylresorcinol, ethylresorcinol or tannin, which is not condensed with the phenol-formaldehyde resin;
and **in that** the adhesive composition has a free formaldehyde content of 0,1 wt. % or less, as determined by the method ISO 11402:2004.

2. Monocomponent adhesive composition according to claim 1, which comprises from 30 wt.% to 65 wt. % of the formaldehyde-based resin as defined in claim 1.

3. Monocomponent adhesive composition according to any one of the previous claims, wherein in the second component, the lignin is selected from kraft lignin and organosolv lignin.

4. Monocomponent adhesive composition according to any one of the previous claims, wherein in the second component; the lignosulfonate is selected from sodium, potassium and ammonium salts.

5. Monocomponent adhesive composition according to any one of the previous claims, wherein in the second component, the tannin is selected from quebracho, mimosa, pine or spruce tannin.

6. Monocomponent adhesive composition according to any one of the previous claims, which comprises between 2 wt.% and 8 wt. % of the at least one compound selected from resorcinol, methylresorcinol, ethylresorcinol or tannin, not condensed with the phenol-formaldehyde resin.

7. Monocomponent adhesive composition according to any one of the previous claims, wherein the molar ratio of formaldehyde with regard to phenol in the formaldehyde-based resin is between 1,6 and 2,7.

8. Monocomponent adhesive composition according to any one of the previous claims, wherein the at least one formaldehyde scavenger is selected from urea, urea derivatives, hexamine, amino group containing compounds, hexamine, sulphite salts and metabisulphite salts

9. Monocomponent adhesive composition according to any one of claims 1 to 8, obtained by adding the at least one of resorcinol, methylresorcinol, ethylresorcinol or tannin to the formaldehyde-based resin at a temperature of 20°C or below, preferably 15 °C or below.

10. Process for obtaining a monocomponent adhesive composition according to any one of claims 1 to 8, comprising:
a) providing a formaldehyde-based resin, obtained by reaction of formaldehyde with a second component, wherein:
- said second component consists of phenol, the molar ratio of formaldehyde with regard to phenol in the formaldehyde-based resin being between 1,5 and 3,0; or
- said second component is a mixture of phenol and at least one of lignin, lignosulfonate, tannin, cardanol, pyrolysis oil of biomass, or hydrochar obtained by thermal treatment of agroforestry residues, wherein in a formaldehyde-phenol resin having a molar ratio of formaldehyde with regard to phenol between 1,5 and 3,0, up to 50 wt. % of the phenol is replaced by an amount in weight, of at least one of lignin, lignosulfonate, tannin, cardanol, pyrolysis oil of biomass, or hydrochar obtained by thermal treatment of agroforestry residues, said amount in weight being exactly the same amount in weight of replaced phenol or up to 25% more or less than the amount in weight of replaced phenol;
b) adding from 0,5 wt.% to 30 wt. % of at least one formaldehyde scavenger, at a temperature of 20 to 60 °C, until a formaldehyde-based resin comprising 0,1 wt. % or less of free formaldehyde as determined by the method ISO 11402:2004 is obtained;
c) cooling down to 10-20 °C and adding from 1 wt. % to 10 wt. % of at least one compound selected from resorcinol, methylresorcinol, ethylresorcinol or tannin.

11. Process according to claim 10, wherein in step a) a formaldehyde-based resin is prepared by a condensation reaction of formaldehyde with the second component, in an aqueous medium, in presence of 0,5 wt. % to 15 wt. % of a basic catalyst, at an initial pH of from 8 to 13, and at temperatures between 55 and 90°C.

12. Process according to claims 10 or 11, wherein the basic catalyst is selected from NaOH, KOH and Ca(OH)₂.

13. Binder composition for fibrous substrates, comprising the monocomponent adhesive composition of any one of claims 1 to 8 or obtained by the process of any of claims 10 to 12.

14. Binder composition according to claim 13, further comprising one or more of hydrophobic emulsion, fibre softeners, adhesion promoters, flame retardants, crosslinkers, catalysts, and colorants.

15. Use of the binder composition of any of claims 13 or 14, for binding various materials such as wood fibres, chips, particles, flakes or strands, and/or synthetic fibres such as polyester, polyethylene or polypropylene, fibreglass or rock wool, and/or natural fibres like flax, hemp, rye straw, wheat straw, rice straw, hemp stalks, kenaf stalks or sugar cane residues, and/or cellulose fibres and/or cellulose particles.

16. Use according to claim 15, for the manufacture of wood composite boards, such as wood derived boards, fibreboards, natural and/or synthetic, woven or non-woven fibre mats for compression molding and the resulting composites, particleboards, chip boards, oriented strand boards, plywood; and paperboards, or fibreglass or rock wool insulations.

17. Wood composite boards, obtained by the use according to any one of claims 15 and 16.

18. Fibreglass or rock wool insulations, obtained by the use according to any one of claims 15 and 16.

## Patentansprüche

1. Wässrige Einkomponenten-Klebstoffzusammensetzung, nützlich als Bindemittelzusammensetzung für faserförmige Substrate, **dadurch gekennzeichnet, dass** die Klebstoffzusammensetzung umfasst:
(A) 5 Gew.-% bis 75 Gew.-% eines Harzes auf Formaldehyd-Basis, erhalten durch Umsetzen von Formaldehyd mit einer zweiten Komponente und umfassend 0,5 Gew.-% bis 30 Gew.-% mindestens eines Formaldehyd-Fängers und umfassend 0,1 Gew.-% oder weniger freies Formaldehyd, wie anhand des Verfahrens ISO 11402:2004 bestimmt; wobei
- die zweite Komponente aus Phenol besteht, wobei das Molverhältnis von Formaldehyd bezogen auf Phenol in dem Harz auf Formaldehyd-Basis zwischen 1,5 und 3,0 beträgt; oder
- die zweite Komponente ein Gemisch von Phenol und mindestens einem aus Lignin, Lignosulfonat, Tannin, Cardanol, Pyrolyseöl von Biomasse oder Hydrokohle, erhalten durch thermische Behandlung von agrarforstwirtschaftlichen Rückständen, ist, wobei in einem Formaldehyd-Phenol-Harz mit einem Molverhältnis von Formaldehyd bezogen auf Phenol zwischen 1,5 und 3,0 bis zu 50 Gew.-% des Phenols durch eine Gewichtsmenge von mindestens einem aus Lignin, Lignosulfonat, Tannin, Cardanol, Pyrolyseöl von Biomasse oder Hydrokohle, erhalten durch thermische Behandlung von agrarfortwirtschaftlichen Rückständen, ersetzt sind, wobei die Gewichtsmenge genau die gleiche Gewichtsmenge an ersetztem Phenol oder bis zu 25% mehr oder weniger als die Gewichtsmenge an ersetztem Phenol ist;
(B) 0,5 Gew.-% bis 10 Gew.-% mindestens einer Verbindung, ausgewählt aus Resorcin, Methylresorcin, Ethylresorcin oder Tannin, welche nicht mit dem Phenyl-Formaldehyd-Harz kondensiert ist;
und dadurch, dass die Klebstoffzusammensetzung einen Gehalt an freiem Formaldehyd von 0,1 Gew.-% oder weniger, wie anhand des Verfahrens ISO 11402:2004 bestimmt, aufweist.

2. Einkomponenten-Klebstoffzusammensetzung nach Anspruch 1, welche 30 Gew.-% bis 65 Gew.-% des Harzes auf Formaldehyd-Basis, wie in Anspruch 1 definiert, umfasst.

3. Einkomponenten-Klebstoffzusammensetzung nach einem der vorhergehenden Ansprüche, wobei in der zweiten Komponente das Lignin ausgewählt ist aus Kraft-Lignin und Organosolv-Lignin.

4. Einkomponenten-Klebstoffzusammensetzung nach einem der vorhergehenden Ansprüche, wobei in der zweiten Komponente das Lignosulfonat ausgewählt ist aus Natrium-, Kalium- und Ammoniumsalzen.

5. Einkomponenten-Klebstoffzusammensetzung nach einem der vorhergehenden Ansprüche, wobei in der zweiten Komponente das Tannin ausgewählt ist aus Quebracho-, Mimosa-, Kiefer- oder Fichten-Tannin.

6. Einkomponenten-Klebstoffzusammensetzung nach einem der vorhergehenden Ansprüche, welche zwischen 2 Gew.-% und 8 Gew.-% der mindestens einen Verbindung, ausgewählt aus Resorcin, Methylresorcin, Ethylresorcin oder Tannin, nicht kondensiert mit dem Phenol-Formaldehyd-Harz, umfasst.

7. Einkomponenten-Klebstoffzusammensetzung nach einem der vorhergehenden Ansprüche, wobei das Molverhältnis von Formaldehyd bezogen auf Phenol in dem Harz auf Formaldehyd-Basis zwischen 1,6 und 2,7 beträgt.

8. Einkomponenten-Klebstoffzusammensetzung nach einem der vorhergehenden Ansprüche, wobei der mindestens eine Formaldehyd-Fänger ausgewählt ist aus Harnstoff, Harnstoff-Derivaten, Hexamin, Aminogruppen enthaltenden Verbindungen, Hexamin, Sulfitsalzen und Metabisulfitsalzen.

9. Einkomponenten-Klebstoffzusammensetzung nach einem der Ansprüche 1 bis 8, erhalten durch Zugabe des mindestens einen aus Resorcin, Methylresorcin, Ethylresorcin oder Tannin zu dem Harz auf Formaldehyd-Basis bei einer Temperatur von 20°C oder niedriger, vorzugsweise 15°C oder niedriger.

10. Verfahren zum Erhalt einer Einkomponenten-Klebstoffzusammensetzung nach einem der Ansprüche 1 bis 8, umfassend:
a) Bereitstellen eines Harzes auf Formaldehyd-Basis, erhalten durch Umsetzen von Formaldehyd mit einer zweiten Komponente, wobei:
- die zweite Komponente aus Phenol besteht, wobei das Molverhältnis von Formaldehyd bezogen auf Phenol in dem Harz auf Formaldehyd-Basis zwischen 1,5 und 3,0 beträgt; oder
- die zweite Komponente ein Gemisch von Phenol und mindestens einem aus Lignin, Lignosulfonat, Tannin, Cardanol, Pyrolyseöl von Biomasse oder Hydrokohle, erhalten durch thermische Behandlung von agrarforstwirtschaftlichen Rückständen, ist, wobei in einem Formaldehyd-Phenol-Harz mit einem Molverhältnis von Formaldehyd bezogen auf Phenol zwischen 1,5 und 3,0 bis zu 50 Gew.-% des Phenols durch eine Gewichtsmenge mindestens eines aus Lignin, Lignosulfonat, Tannin, Cardanol, Pyrolyseöl von Biomasse oder Hydrokohle, erhalten durch thermische Behandlung von agrarforstwirtschaftlichen Rückständen, ersetzt sind, wobei die Gewichtsmenge genau die gleiche Gewichtsmenge an ersetztem Phenol oder bis zu 25% mehr oder weniger als die Gewichtsmenge an ersetztem Phenol ist;
b) Zugabe von 0,5 Gew.-% bis 30 Gew.-% mindestens eines Formaldehyd-Fängers bei einer Temperatur von 20 bis 60°C, bis ein Harz auf Formaldehyde-Basis, das 0,1 Gew.-% oder weniger freies Formaldehyd umfasst, wie anhand des Verfahrens ISO 11402:2004 bestimmt, erhalten wird;
c) Herabkühlen auf 10-20°C und Zugabe von 1 Gew-% bis 10 Gew.-% mindestens einer Verbindung, ausgewählt aus Resorcin, Methylresorcin, Ethylresorcin oder Tannin.

11. Verfahren nach Anspruch 10, wobei in Schritt a) ein Harz auf Formaldehyd-Basis durch eine Kondensationsreaktion von Formaldehyd mit der zweiten Komponente, in einem wässrigen Medium, in Gegenwart von 0,5 Gew.-% bis 15 Gew.-% eines basischen Katalysators, bei einem anfänglichen pH von 8 bis 13, und bei Temperaturen zwischen 55 und 90°C hergestellt wird.

12. Verfahren nach den Ansprüchen 10 oder 11, wobei der basische Katalysator ausgewählt ist aus NaOH, KOH und Ca(OH)₂.

13. Bindemittelzusammensetzung für faserförmige Substrate, umfassend die Einkomponenten-Klebstoffzusammensetzung nach einem der Ansprüche 1 bis 8 oder erhalten durch das Verfahren nach einem der Ansprüche 10 bis 12.

14. Bindemittelzusammensetzung nach Anspruch 13, weiter umfassend eines oder mehrere aus hydrophober Emulsion, Faserweichmachern, Haftvermittlern, Flammhemmern, Vernetzern, Katalysatoren und Färbemitteln.

15. Verwendung der Bindemittelzusammensetzung nach einem der Ansprüche 13 oder 14 zum Binden verschiedener Materialien, wie z.B. Holzfasern, Späne, Partikel, Flocken oder Stränge, und/oder synthetischer Fasern, wie z.B. Polyester, Polyethylen oder Polypropylen, Glasfaser oder Steinwolle, und/oder Naturfasern wie Flachs, Hanf, Roggenstroh, Weizenstroh, Reisstroh, Hanfstängel, Kenafstängel oder Zuckerrohr-Rückstände, und/oder Cellulosefasern und/oder Cellulosepartikel.

16. Verwendung nach Anspruch 15 zur Herstellung von Holzverbundplatten, wie z.B. von Holzderivatplatten, Faserplatten, natürlichen und/oder synthetischen Gewebe- oder Vlies-Fasermatten zum Formpressen und den resultierenden Verbundmaterialien, Spanplatten (particleboards), Spanplatten (chip boards), OSB-Platten, Sperrholz; und Kartonagen oder Glasfaser- oder Steinwolle-Isolierungen.

17. Holzverbundplatten, erhalten durch die Verwendung nach einem der Ansprüche 15 und 16.

18. Glasfaser- oder Steinwolle-Isolierungen, erhalten durch die Verwendung nach einem der Ansprüche 15 und 16.

## Revendications

1. Composition adhésive aqueuse monocomposant, utilisable comme composition de liant pour des substrats fibreux, **caractérisée en ce que** la composition adhésive comprend :
(A) de 5 % en poids à 75 % en poids d'une résine à base de formaldéhyde, obtenue par réaction du formaldéhyde avec un second composant, et comprenant de 0,5 % en poids à 30 % en poids d'au moins un capteur de formaldéhyde, et comprenant 0,1 % en poids ou moins de formaldéhyde libre tel que déterminé par la méthode ISO 11402 :2004 ; dans laquelle
- ledit second composant est constitué de phénol, le rapport molaire du formaldéhyde par rapport au phénol dans la résine à base de formaldéhyde étant compris entre 1,5 et 3,0 ; ou
- ledit second composant est un mélange de phénol et d'au moins un élément parmi la lignine, le sulfonate de lignine, le tanin, le cardanol, l'huile de pyrolyse de biomasse, ou l'hydrochar obtenu par traitement thermique de résidus agroforestiers, dans lequel, dans une résine formaldéhyde-phénol ayant un rapport molaire du formaldéhyde par rapport au phénol compris entre 1,5 et 3,0, jusqu'à 50 % en poids du phénol sont remplacés par une quantité en poids d'au moins un des éléments suivants : la lignine, le sulfonate de lignine, le tanin, le cardanol, l'huile de pyrolyse de biomasse ou l'hydrochar obtenu par traitement thermique de résidus agroforestiers, ladite quantité en poids étant exactement la même quantité en poids du phénol remplacé ou jusqu'à 25 % en plus ou en moins de la quantité en poids de phénol remplacé ;
(B) de 0,5 % en poids à 10 % en poids d'au moins un élément choisi parmi le résorcinol, le méthylrésorcinol, l'éthylrésorcinol ou le tanin, qui n'est pas condensé avec la résine phénol-formaldéhyde ;
et **en ce que** la composition adhésive a une teneur en formaldéhyde libre de 0,1 % en poids ou moins, telle que déterminée par la méthode ISO 11402:2004.

2. Composition adhésive monocomposant selon la revendication 1, qui comprend de 30 % en poids à 65 % en poids de la résine à base de formaldéhyde telle que définie dans la revendication 1.

3. Composition adhésive monocomposant selon l'une quelconque des revendications précédentes, dans laquelle, dans le second composant, la lignine est choisie parmi la lignine kraft et la lignine organosolv.

4. Composition adhésive monocomposant selon l'une quelconque des revendications précédentes, dans laquelle dans le second composant, le sulfonate de lignine est choisi parmi les sels de sodium, de potassium et d'ammonium.

5. Composition adhésive monocomposant selon l'une quelconque des revendications précédentes, dans laquelle dans le second composant, le tanin est choisi parmi le tanin de québracho, de mimosa, de pin ou d'épicéa.

6. Composition adhésive monocomposant selon l'une quelconque des revendications précédentes, qui comprend entre 2 % en poids et 8 % en poids dudit au moins un élément choisi parmi le résorcinol, le méthylrésorcinol, l'éthylrésorcinol ou le tanin, non condensé avec la résine phénol-formaldéhyde.

7. Composition adhésive monocomposant selon l'une quelconque des revendications précédentes, dans laquelle le rapport molaire du formaldéhyde par rapport au phénol dans la résine à base de formaldéhyde est compris entre 1,6 et 2,7.

8. Composition adhésive monocomposant selon l'une quelconque des revendications précédentes, dans laquelle ledit au moins un capteur de formaldéhyde est choisi parmi l'urée, les dérivés de l'urée, l'hexamine, les composés contenant des groupes amino, l'hexamine, les sels de sulfite et les sels de métabisulfite.

9. Composition adhésive monocomposant selon l'une quelconque des revendications 1 à 8, obtenue en ajoutant ledit au moins un parmi le résorcinol, le méthylrésorcinol, l'éthylrésorcinol ou le tanin à la résine à base de formaldéhyde à une température de 20 °C ou moins, de préférence de 15 °C ou moins.

10. Procédé d'obtention d'une composition adhésive monocomposant selon l'une quelconque des revendications 1 à 8, comprenant :
a) la mise à disposition d'une résine à base de formaldéhyde, obtenue par réaction du formaldéhyde avec un second composant, dans laquelle :
- ledit second composant est constitué de phénol, le rapport molaire du formaldéhyde par rapport au phénol dans la résine à base de formaldéhyde étant compris entre 1,5 et 3,0 ; ou
- ledit second composant est un mélange de phénol et d'au moins un élément parmi la lignine, le sulfonate de lignine, le tanin, le cardanol, l'huile de pyrolyse de biomasse, ou l'hydrochar obtenu par traitement thermique de résidus agroforestiers, dans lequel, dans une résine formaldéhyde-phénol ayant un rapport molaire du formaldéhyde par rapport au phénol compris entre 1,5 et 3,0, jusqu'à 50 % en poids du phénol sont remplacés par une quantité en poids d'au moins l'un des éléments suivants : la lignine, le sulfonate de lignine, le tanin, le cardanol, l'huile de pyrolyse de biomasse ou l'hydrochar obtenu par traitement thermique de résidus agroforestiers, ladite quantité en poids étant exactement la même quantité en poids du phénol remplacé ou jusqu'à 25 % en plus ou en moins de la quantité en poids de phénol remplacé ;
b) l'addition de 0,5 % en poids à 30 % en poids d'au moins un capteur de formaldéhyde, à une température comprise entre 20 et 60 °C, jusqu'à l'obtention d'une résine à base de formaldéhyde comprenant 0,1 % en poids ou moins de formaldéhyde libre tel que déterminé par la méthode ISO 11402:2004 ;
c) le refroidissement à 10-20 °C et l'ajout de 1 % en poids à 10 % en poids d'au moins un élément choisi parmi le résorcinol, le méthylrésorcinol, l'éthylrésorcinol ou le tanin.

11. Procédé selon la revendication 10, dans lequel dans l'étape a) une résine à base de formaldéhyde est préparée par une réaction de condensation du formaldéhyde avec le second composant, dans un milieu aqueux, en présence de 0,5 % en poids à 15 % en poids d'un catalyseur basique, à un pH initial compris entre 8 et 13, et à des températures comprises entre 55 et 90 °C.

12. Procédé selon les revendications 10 ou 11, dans lequel le catalyseur basique est choisi parmi NaOH, KOH et Ca(OH)₂.

13. Composition de liant pour substrats fibreux, comprenant la composition adhésive monocomposant selon l'une quelconque des revendications 1 à 8 ou obtenue par le procédé selon l'une quelconque des revendications 10 à 12.

14. Composition de liant selon la revendication 13, comprenant en outre un ou plusieurs des éléments suivants : une émulsion hydrophobe, des adoucisseurs de fibres, des promoteurs d'adhésion, des retardateurs de flamme, des agents de réticulation, des catalyseurs et des colorants.

15. Utilisation de la composition de liant selon l'une quelconque des revendications 13 ou 14, pour lier divers matériaux tels que des fibres, copeaux, particules, flocons ou brins de bois, et/ou des fibres synthétiques telles que le polyester, le polyéthylène ou le polypropylène, la fibre de verre ou la laine de roche, et/ou des fibres naturelles telles que le lin, le chanvre, la paille de seigle, la paille de blé, la paille de riz, les tiges de chanvre, les tiges de kenaf ou les résidus de canne à sucre, et/ou des fibres de cellulose et/ou des particules de cellulose.

16. Utilisation selon la revendication 15, pour la fabrication de panneaux composites en bois, tels que des panneaux dérivés du bois, des panneaux de fibres, des nattes de fibres naturelles et/ou synthétiques, tissées ou non tissées, pour le moulage par compression et les composites qui en résultent, des panneaux de particules, des panneaux de copeaux, des panneaux à copeaux orientés, du contreplaqué ; et des panneaux de papier, ou des isolants en fibre de verre ou en laine de roche.

17. Panneaux composites en bois, obtenus par l'utilisation selon l'une quelconque des revendications 15 et 16.

18. Isolants en fibres de verre ou en laine de roche, obtenus par l'utilisation selon l'une quelconque des revendications 15 et 16.
